Europäisches Patentamt

(19) European Patent Office

Office européen des brevets

(11) Publication number: **0 187 325**
**B1**

(12) **EUROPEAN PATENT SPECIFICATION**

(45) Date of publication of patent specification: **15.11.89**

(21) Application number: **85116164.6**

(22) Date of filing: **18.12.85**

(51) Int. Cl.⁴: **C 03 B 9/38,** C 03 B 9/325, C 03 B 9/34, C 03 B 9/36

(54) Cooling system for neck ring and parison mold.

(30) Priority: **19.12.84 US 683450**

(43) Date of publication of application:
**16.07.86 Bulletin 86/29**

(45) Publication of the grant of the patent:
**15.11.89 Bulletin 89/46**

(84) Designated Contracting States:
**AT BE CH DE FR GB IT LI LU NL SE**

(56) References cited:
**EP-A-0 125 022**
**DE-A-2 911 730**
**FR-A-1 320 185**
**FR-A-2 321 376**
**LU-A- 80 311**
**US-A-3 015 911**
**US-A-3 024 571**
**US-A-3 249 418**

(73) Proprietor: **BALL CORPORATION**
**345 South High Street**
**Muncie Indiana 47302 (US)**

(72) Inventor: **Doud, Wilbur Orland**
**8505 North Glacier Drive**
**Muncie Indiana 47302 (US)**
Inventor: **Davis, Robert Earl**
**4306 North Tillotson Avenue**
**Muncie Indiana 47304 (US)**
Inventor: **Sawyer, Fred Robert**
**11 Connie Drive**
**Muncie Indiana 47302 (US)**

(74) Representative: **Kraus, Walter, Dr. et al**
**Patentanwälte Kraus, Weisert & Partner**
**Thomas-Wimmer-Ring 15**
**D-8000 München 22 (DE)**

Courier Press, Leamington Spa, England.

## Description

The present invention relates to a parison molding portion of an individual glassware molding machine, of the type having a parison mold, a neck ring, a receiver and means for cooling the neck ring and the parison mold, said means for cooling include a plurality of cooling passages for cooling the neck ring.

A parison molding portion of this type is disclosed in US—A—3024571.

Furthermore, the present invention relates to a parison molding portion of an individual section glassware molding machine for pressing a gob of molten glass into a blank mold by means of a plunger inserted into an associated parison and neck mold to form a parison having a body portion and an integral finished neck portion, said parison molding portion comprises:

a parison mold being disposed around a central axis that is substantially vertical, and having a lower surface that is disposed substantially orthogonal to said central axis;

a receiver being disposed circumferentially around said central axis, having a top surface that is disposed substantially orthogonal to said central axis;

a neck ring having a ring axis, having a first surface that is disposed substantially orthogonal to said ring axis, having a second surface that is disposed substantially parallel to said first surface and that is spaced apart therefrom, and having an array of passageways that are disposed substantially parallel to said ring axis, that are spaced circumferentially around said ring axis;

neck ring holder means for receiving and retaining said neck ring, for transferring said neck ring and a parison from said parison molding portion of said individual secton glassware molding machine to a blow mold portion thereof, for returning said neck ring to said parison molding portion with said neck ring disposed intermediate of said receiver and said parison mold, with said ring axis and said central axis substantially coinciding, and with said first surface of said neck ring disposed downwardly, for supporting said neck ring, and for allowing limited movement of said neck ring along said ring axis.

Finally the present invention relates to a process of cooling mold portions during the forming of molten glass in a parison molding assembly to form a parison by means of a plunger inserted along a central axis into associated neck ring and blank molding means to define a finish neck portion and an integral body blank portion, which comprises:

a) providing an array of passageways for cooling said neck ring, that are disposed substantially longitudinally along said central axis, and that are circumferentially spaced around said central axis;

b) communicating a fluid with said array of passageways for cooling said neck ring;

c) providing a receiver; and

d) disposing said receiver around said central axis with a top surface thereof proximal to said neck ring.

In the formation of glassware it has been common practice to form a blank, or parison, in a parison mold portion of the glassware molding machine, to automatically transfer the parison to a blow mold portion of the glassware molding machine, and then to blow mold the parison into conformity with a low mold.

In the parison mold portion of the glassware molding machine, a gob of molten glass is deposited into the parison mold; and a parison plunger is pressed into the parison mold, forcing the gob of glass into a parison that has the combined shape of the parison mold and the parison plunger.

The parison mold portion of the glassware molding machine includes a neck ring that is constructed of two neck ring halves, and that forms the finish portion, or threaded neck, of the parison.

It is this finish portion, or threaded neck, of the parison that is used in the blow mold portion of the glassware molding machine to hold the parison as the parison is blow molded to the final configuration of the glassware; and this same finish portion becomes the threaded neck of the completed container.

Since the finish portion, or threaded neck of the parison is used to hold the parison for blow molding, the finish portion must be cool enough to have the physical properties that will enable it to withstand the blow molding process and still retain dimensional integrity for the completed container; and yet, the temperature of the parison must be sufficeintly high to provide a viscosity that will blow mold.

Thus, it has been a problem to provide cooling for the neck ring that will provide mechanical strength and dimensional integrity in the finish portion of the parison while maintaining the remainder of the parison at a temperature that is sufficiently high to allow blow molding.

For a number of years the prior art has dealt with sundry means for cooling various components that mold glassware. The current state of art may best be shown in US—A—3 024 571 which discloses a parison molding portion of the first and second types mentioned in the beginning as well as a process for cooling mold portions of the type mentioned also in the beginning. Although US—A—3 024 571 proposes internal cooling means for glass molding surfaces and discloses that cooling air currents may be used by allowing their passage through various components including ring arms and through cooling air slots provided over relatively short upper part on the outer surface of the neck ring, it has been found in actual practice that such means and methods fall short in providing an effective cooling process.

Also related to the subject invention is US—A—3 015 911 which discloses a particular cooling scheme for forming neck finishes on glass containers. However, this document deals with the flow mold side and does not deal with the blank or parison side of the glass forming operation.

In order to overcome the deficiencies in the processes, structural features for cooling glass molding surfaces and the products produced by glassware forming molds presently used, as well as those used heretofore, it is a principal object of the subject invention to provide improved details and characteristics on the blank mold side of a glass forming machine for sufficiently cooling in a controlled fashion a newly formed glass container parison, particularly the portion surrounding the mouth or opening of said container.

A further object of this invention is to provide means for adequately controlling the amount of heat that may be transferred between molding surfaces for glassware and uniformly cooling the surfaces of the glassware to render them free of any thermal checks or cracks thereon.

Another object of the subject invention is to optimize cooling effects during the formation of the blank or parison so that a finish of a newly produced glass container is formed having a flat terminal portion with a true circular mouth whereby a closure may be properly seated to seal the container.

Another object of the subject invention is to provide means for uniform and sufficient cooling of glassware, especially the finish thereof, without sacrifice of productivity and output from the individual sections of the glass-forming machines.

The subject invention provides means for increasing productivity of glassware and machine efficiency in excess of 10% or more without sacrifice of glassware quality.

Another important advantage of the subject invention is that it provides means for controlled cooling on the blank side of a glassware forming machine so that certain treatments are minimized, including swabbing.

According to a first aspect the invention provides a parison molding portion of the first type mentioned in the beginning which is characterized in that said means for cooling the neck ring and the parison mold includes a plurality of cooling passages in the receiver that communicate with the cooling passages provided in the neck ring.

According to a second aspect the invention provides a parison molding portion of the second type mentioned in the beginning which is characterized in that said parison mold has first and second mold portions that are transversely separable from said central axis and that are transversely closable to form said parison mold;

said receiver has a fluid carrying passage therein that is disposed circumferentially around said central axis, and has a first array of internal passageways that are spaced circumferentially around said central axis and that communicate said fluid carrying passage to said top surface;

said second array of passageways of said neck ring are internal passageways that intercept both said first surface and said second surface; and

·means is provided for resiliently urging said top surface of said receiver upwardly and into contact with said neck ring when said neck ring holder means returns said neck ring to said parison molding portion.

According to a third aspect the invention provides a process for cooling mold portions of the type mentioned in the begining which is characterized in that said step of communicating a fluid with said array of passageways for cooling said neck ring comprises:

1) providing said array of passageways in said neck ring as internal passageways, that extend through said neck ring from a first surface thereof to a second surface thereof;

2) communicating said fluid with said internal passageways proximal to said first surface;

3) disposing said top surface of said receiver proximal to said first surface of said neck ring;

4) providing a receiver cap manifold in said receiver that is spaced apart from said top surface and that is disposed circumferentially around said central axis;

5) providing an array of internal passageways that open from said receiver cap manifold through said top surface or said receiver, that are circumferentially spaced around said central axis, and that are positioned to communicate with said array of internal passageways in said neck ring; and

6) juxtaposing said top surface of said receiver against said first surface of said neck ring.

In the present invention, a parison molding portion of an individual glassware molding machine includes a parison mold that consists of a pair of mold halves and that forms the greater portion of the outside contour of the parison, and split neck ring that consists of a pair of neck ring halves and that forms the finish, or threaded neck, of the parison, a finish guide ring that is retained in an interior groove of the neck ring halves and that forms the top surface of the threaded neck of the parison, and a parison plunger that forms the interior of the parison.

The neck ring is juxtaposed to an upper receiver cap; and the upper receiver cap is telescopically connected to a lower receiver cap. A circumferential groove in the upper receiver cap opens downwardly and is telescopically closed by the lower receiver cap. The circumferential groove of the upper receiver cap and the lower receiver cap cooperate to form both a pneumatic actuator and a receiver cap manifold for receiving and for distributing cooling air.

The upper receiver cap includes a plurality of first cooling holes that are disposed radially outward from the vertical axis of the parison mold, that are circumferentially spaced around the vertical axis, and that communicate with the receiver cap manifold.

The neck ring includes a plurality of second cooling holes that are disposed radially outward from the vertical axis of the parison mold, that are circumferentially spaced around the vertical axis, and that are spaced to register with the first cooling holes.

A circumferentially disposed manifold is situated intermediate of the upper receiver cap and the lower receiver cap; and the upper receiver cap is forced upwardly and into contact with the neck ring by the air pressure in the receiver cap manifold. Engaging springs may be employed to assist this engagement.

The parison mold halves each include a plurality of third cooling holes that are vertically disposed, that are circumferentially spaced around the parison mold, and that register with the second cooling holes in the neck ring when the neck ring halves are closed and held against the parison mold.

The parison mold includes an interior groove that is circumferentially shaped; and, when the mold halves close, this interior groove grasps the neck ring, clamping the neck ring halves together and clamping the neck ring halves against the parison mold, and connecting the third cooling holes of the parison mold to the second cooling holes of the neck ring.

The flow of cooling air is introduced into the receiver cap manifold by an air hose; and the cooling air flows upwardly through the first cooling holes in the upper receiver cap, flows upwardly through the portion of the second cooling holes of the neck ring that are disposed below the finish guide ring, flows upwardly through circumferential slots in the finish guide ring that is disposed in an internal circumferential groove in the neck ring halves, and flows upwardly through the portion of the second cooling holes of the neck ring that are disposed above the finish guide ring.

A portion of the cooling air flows upwardly through the third cooling holes that are disposed in the parison mold; and this cooling air is discharged through a mold baffle that is disposed above and juxtaposed to the parison mold.

A remainder of the cooling air then flows radially outward from the neck ring through a plurality of circumferentially spaced and radially disposed notches in the neck ring, thereby providing additional cooling for the neck ring by engagement with the radially disposed cooling notches and a plurality of radially disposed cooling fins that are formed by, and that are interposed between, the cooling notches.

Thus, the neck ring is cooled by a flow of cooling air that flows upwardly through the plurality of vertically disposed and circumferentially spaced second cooling holes in the neck ring, and is cooled by a portion of the cooling air flowing radially out through the radially disposed notches; and the remainder of the cooling air is directed upwardly through a plurality of vertically disposed and circumferentially spaced cooling holes in the parison mold.

The results are that both the neck ring and the parison mold are cooled; but the neck ring receives more cooling than the parison mold; so that the finish portion, or threaded neck, of the parison is cooled sufficiently to give mechanical strength and dimensional stability to the finish portion, and the temperature of the remainder of the parison is kept high enough to permit blow molding of the container.

The essential cooling means achieved by the subject invention is accomplished by the advancement of a plurality of streams of fluid circumferentially situated about the wall portion of the associated neck ring. In essence, effective ring cooling is accomplished on the blank side of the glassware forming machine wherein heat is readily transferred to said neck ring from the associated molding parts and wherein the neck ring, during normal operation, is on the blank side at least about 80% of the time. It is paramount, therefore, that effective cooling is carried out on the blank side and at that stage of the process as opposed to the blow mold side where a minimum of time is spent. Thus, it is important that controlled or programmed cooling be accomplished when heat is actually being taken up or transferred to the neck ring and associated parts. However, because of the rather restrictive mold configuration on the blank side, it has been found, heretofore, to be impractical to accomplish a simplistic and straightforward means for effectively cooling the molding members that come into contact with the finish portion of a glass container.

The subject invention allows for effective cooling of mold portions associated with glassware forming machines, especially during the forming of molten glass in a parison molding assembly to form a parison by means of a plunger inserted into an associated neck ring and blank molding means to define a finish neck portion and an integral body blank portion. In particular, the instant invention relates to a process which comprises advancing streams of fluid within predetermined passageways arranged so as to be circumferentially spaced within the wall portion of the associated neck ring to effectively cool the surfaces being molded, especially at the finish neck portion of the parison being formed. Heretofore, such molding surfaces including the neck ring have been poorly or inadequately cooled by conventional cooling means.

The subject invention, in particular, relates to a mold assembly for pressing a gob of molten glass into a blank mold by means of a plunger inserted into an associated parison and neck mold to form a parison having a body portion and an integral finished neck portion, said mold assembly comprising a receiver having a first array of internal passageways, a neck ring coengagable with said receiver, said neck ring having a finish forming portion adapted to form the finish of the parison, a parison forming mold coengageable with said neck ring and having a molding cavity to form the remainder of the parison, said finish forming portion of said neck ring having a second array of internal passageways spaced from the inner surface of said molding cavity and extending substantially parallel to the central aixs of said molding cavity, said parison forming mold having a third array of internal passageways spaced from the inner surface of said molding cavity and extending substantially parallel to said central axis, said first, second, and third arrays of internal passageways being in substantial alignment with one another. In a more preferred embdoiment the first array should have a cross sectional area smaller than the second array.

In further detail the invention provides a parison molding portion comprising a receiver having a first array of internal passageways, a molding body having a parison forming portion defining a mold cavity for said blank parison and a finish molding parison adapted to form the finish of the parison, said finish molding portion having a second array of internal passageways spaced from the inner surface of said molding portion and extending substantially parallel to the central axis of the mold cavity, said first and second internal arrays being in substantial alignment with one another, and said first array having a cross sectional area smaller than the second array.

Moreover the invention provides a parison molding portion comprising a receiver having a fluid carrying passsage and a first array of internal passageways communicating between said fluid carrying passage and the surface of said receiver, a neck ring having a second array of internal passageways positioned to be in substantial alignment with the first array when said receiver and neck ring are juxtaposed with one another, and a guide ring situated inside said neck ring and having an intermediate array of passageways therein, said intermediate array being in substantial alignment with the second as well as the first array of passageways, the cross sectional area of said first array being substantially smaller than the cross sectional area of either the second or intermediate array of passageways.

Furthermore the invention provides a parison molding portion comprising a receiver having a first array of internal passageways, a neck ring coengagable with said receiver, said neck ring having a finish forming portion adapted to form the finish of the parison, a parison forming mold coengagable with said neck ring and having a molding cavity to form the remainder of the parison, said finish forming portion of said neck ring having a second array of internal passageways spaced from the inner surface of said molding cavity and extending substantially parallel to the central axis of said molding cavity, said parison forming mold having a third array of internal passageways spaced from the inner surface of said molding cavity and extending substantially parallel to said central axis, said first, second and third arrays of internal passageways being in substantial alignment when in juxtaposition with one another.

This parison molding portion can further comprise a baffle for coengaging said parison forming mold, said baffle having a fourth array of internal passageways that communicate between the lower and upper surface portions of said baffle, said fourth array converging inwardly toward said central axis, said first, second and third arrays of internal passageways being in substantial alignment when in juxtaposition with one another, said second, third and fourth arrays having cross sectional areas substantially commensurate with each other, said first cross sectional areas being substantially less than any one of the other cross sectional areas of said passageways.

This parison molding portion be constructed such that the baffle includes means for controlling fluid exiting from said fourth array.

Further the invention provides a parison molding portion of an individual section glassware molding machine for pressing a gob of molten glass into a blank mold by means of a plunger inserted into an associated parison and neck mold to form a parison having a body portion and an integral finished neck portion, which parison molding portion comprises:

a parison mold being disposed around a central axis that is substantially vertical, having first and second mold portions that are transversely separable from said central axis and that are transversely closeable to form said parison mold, and having a lower surface that is disposed substantially orthogonal to said central axis;

a neck ring having a ring axis, having a first surface that is disposed substantially orthogonal to said ring axis, having a second surface that is disposed substantially parallel to said first surface and that is spaced apart therefrom, and having a second array of internal passageways that are disposed substantially parallel to said ring axis, that are spaced circumferentially around said ring axis, and that open through said second surface;

neck ring holder means for receiving and retaining said neck ring, for transferring said neck ring and a parison from said parison molding portion of said individual section glassware molding machine to a blow mold portion thereof, for returning said neck ring to said parison molding portion, with said ring axis and said central axis substantially coinciding, and with said first surface of said neck ring disposed downwardly, for supporting said neck ring, and for allowing limited movement of said neck ring along said ring axis; and

means for communicating fluid with said second array of internal passageways when said neck ring holder returns said neck ring to said parison molding portion.

The above-mentioned means for communicating preferably comprises means for allowing said neck ring to be forced downwardly toward said neck ring holder means. It is furthermore preferred that said mold portions include clamping means, comprising a circumferential groove, for clamping said second surface of said neck ring to said lower surface of said parison mold when said mold portions close. Moreover preferably said parison mold includes a third array of internal passageways that are disposed substantially parallel to said central axis and that are circumferentially spaced around said central axis, that open through said lower surface, and that communicate with said second array of internal passageways when said neck ring is clamped against said parison mold. The neck ring can include bypassing means, for bypassing a portion of said fluid external of said parison molding portion prior to entry to said fluid into said third array of internal passageways.

This parison molding portion can be constructed such that said parison mold includes an upper surface;

said third array of internal passageways extend upwardly through said upper surface;

said parison molding portion includes baffle means for closing said parison mold by contact with said upper surface of said parison mold;

said baffle means includes a fourth array of passageways that communicate with said third array of internal passageways and that extend outwardly through said baffle means; and

said baffle means includes valve means for controlling fluid exiting from said fourth array of passageways.

Moreover it is possible that said neck ring includes an internal groove that divides said second array of internal passageways into two separate cooling hole portions;

said parison molding portion includes a finish guide ring that is disposed in said internal groove; and

said finish guide ring includes intermediate passageway means for intercommunicating respective ones of said separate cooling hole portions. This intermediate passageway means can comprise a plurality of arcuately shaped slots that are disposed substantially parallel to said central axis.

In a process of cooling mold portions during the forming of molten glass in a parison molding assemly to form a parison by means of a plunger inserted into an associated neck ring and blank molding means to define a finish neck portion and an integral body blank portion, the invention provides the improvement which comprises advancing jet streams of fluid within vertical passageways circumferentially spaced within the wall portion of the associated neck ring to effectively cool the surfaces being molded at the finish neck portion of the parison to be formed. In this process said jet streams of fluid are advanced adjacent to said finish neck portion through passageways that are internally situated within the neck ring, said passageways being closely spaced, straight and generally parallel to one another, each passageway being circular in cross section and evenly spaced from the inner wall portion of the associated neck ring.

Brief description of drawings

Figure 1 is a cross sectional elevation of a preferred embodiment of the parison molding portion of an individual section molding machine for molding glassware, with components thereof in a step 1 position wherein the baffle is out, the parison mold halves are separated, the neck ring has been returned from the blow mold portion, the parison plunger is down, and the aligning sleeve is down;

Figure 2 is a cross sectional elevation of the embodiment of Figure 1, with components thereof in a step 2 position wherein the aligning sleeve has been raised and has been inserted into the neck ring by the loading position spring, and the parison plunger has been raised to the loading position by the positioning spacer and the loading position spring;

Figure 3 is a cross sectional elevation of the embodiment of Figures 1 and 2, with components thereof in a step 3 position wherein the parison mold halves are closed, the neck ring is clamped between and against the parison mold halves, and a gob of molten glass has been deposited in the parison mold;

Figure 4 is a cross sectional elevation of the embodiment of the preceding Figures, with the components thereof in a step 4 position wherein the baffle is closing the top of the parison mold, the parison plunger has been forced upward, and a parison has been formed from the gob of molten glass;

Figure 5 is a cross sectional elevation of the embodiment of the preceding Figures, with the components thereof in a step 4 position therein the plunger rod has been pulled down to its lowermost position by an air cylinder, and the aligning sleeve has been pulled downwardly and out of the neck ring by the air cylinder;

Figure 6 is a cross sectional elevation of the embodiment of the preceding Figures, with the components thereof in a step 5 position wherein the baffle has been removed from the parison mold, the parison mold halves have been separated, and both the neck ring and parison have moved to the blow mold portion of the individual section glassware molding machine;

Figure 7 is an enlarged cross sectional elevation of the parison plunger, the plunger head, the pressure ring, and the plunger rod of the embodiment of Figures 1—6, taken substantially the same as Figures 1—6;

Figure 8 is a cross section of the parison plunger and a top view of the plunger head, taken substantially as shown by section line 8—8 of Figure 7, and showing the method of mounting the parison plunger into the plunger head;

Figure 9 is a top view of the finish guide ring, taken substantially as shown by view line 9—9 of Figure 5, and showing the cooling slots of the finish guide ring; and

Figure 10 is a top view of the neck ring, taken substantially as shown by view line 10—10 of Figure 5, showing the cooling notches, and showing the cooling fins that are disposed between adjacent ones of the cooling notches.

Best mode for carrying out the invention

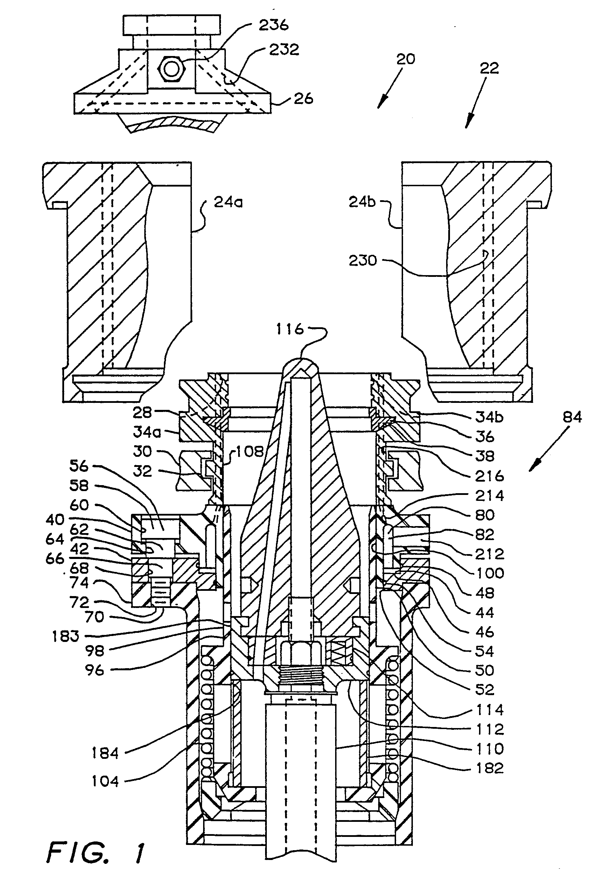

Referring now to the drawings, and more particularly to Figure 1, a parison molding portion 20 of an individual section glassware molding machine, not shown, includes a parison mold 22 that includes parison mold halves 24a and 24b that are shown in their separated positions, and a mold baffle 26 that is shown in the position wherein it is removed from the parison mold 22.

The parison molding portion 20 includes a split neck ring 28 that is disposed in a neck ring holder 30, that rests down against a shoulder 32 of the neck ring holder 30, and that includes a neck ring half 34a and 34b. A finish guide ring 36 is retained in an internal groove 38 in the neck ring 28.

The molding portion 20 includes an upper receiver cap 40 and a lower receiver cap 42. The upper receiver cap 40 includes an outer pilot 44 that is cylindrically shaped; and the lower receiver cap 42 includes a pilot counterbore 46. The outer pilot 44 is slidably fitted into the pilot counterbore 46; and a sliding seal 48 sealingly engages both the pilot counterbore 46 and the outer pilot 44.

The upper receiver cap 40 includes an inner pilot 50 that is circumferentially shaped; and the inner pilot 50 telescopically engages an inner bore 52 of the lower receiver cap 42. A sliding seal 54 sealingly engages both the inner bore 52 and the inner pilot 50.

The upper receiver cap 40 is rotationally fixed to the lower receiver cap 42, but is allowed limited upward movement by means of a plurality of circumferentially spaced shoulder bolts 56.

The shoulder bolts 56 include heads 58 that are disposed in counterbores 60 of the upper receiver cap 40, larger shanks 62 that are disposed in larger holes 64 of the upper receiver cap 40, smaller shanks 66 that are disposed in smaller holes 68 of the lower receiver cap 42, and threaded portions 70 that threadingly engage threaded holes 72 of a guide body 74.

The shoulder bolts 56 securely and rigidly attach the lower receiver cap 42 to the guide body 74 by the larger shanks 62 engaging the lower receiver cap 42 and by the threaded portions 70 engaging the threaded holes 72 of the guide body 74; and the shoulder bolts 56 rotationally index the upper receiver cap 40 to the lower receiver cap 42 while allowing limited vertical movement of the upper receiver cap 40 by virtue of the larger shanks 62 being longer than the length of the larger holes 64 of the upper receiver cap 40.

The upper receiver cap 40 includes a manifold groove 80 that is circumferentially disposed around the upper receiver cap 40, that extends upwardly thereinto, and that cooperates with the lower receiver cap 42, and with the sliding seals 48 and 54 to provide an air manifold, or receiver cap manifold 82.

Also, the circumferential manifold groove 80 cooperates with the telescoping action of the outer pilot 44 and the pilot counterbore 46, with the telescoping action of the inner pilot 50 with the inner bore 52, and with the sliding seals 48 and 54, to provide an air powered actuator 84 for forcing the upper receiver cap 40 into engagement with the neck ring 28.

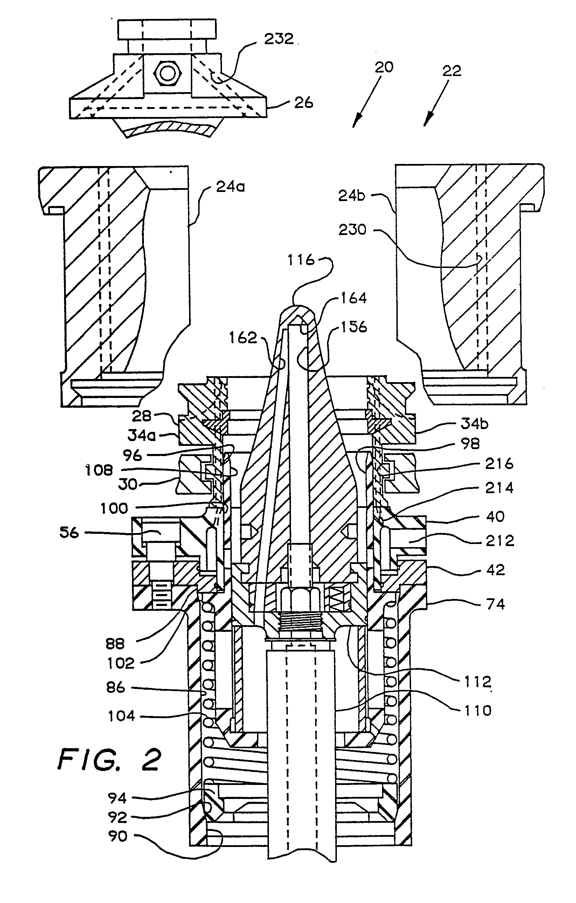

Referring now to Figure 2, the guide body 74 includes a first bore 86; the lower receiver cap 42 includes a pilot 88 that provides radial alignment between the lower receiver cap 42 and the guide body 74 by engaging the first bore 86; and, as previously noted, the shoulder bolts 56 bolt the lower receiver cap 42 to the guide body 74.

The guide body 74 includes a reduced diameter bore 90 and a stop chamfer 92 that is disposed intermediate of the bores 86 and 90. The stop chamfer 92 serves as a retaining stop for a spring adapter 94.

An aligning sleeve 96 includes a cylindrically shaped aligning portion 98 that is slidingly disposed inside a guide bore 100 of the upper receiver cap 40; the aligning sleeve 96 includes a spring adapter flange 102 that engages a loading position spring 104.

In the Figure 2 illustration, the aligning portion 98 of the aligning sleeve 96 is slidably engaged with both the guide bore 100 of the upper receiver cap 40 and an inside surface, or guide bore, 108 of the neck ring 28.

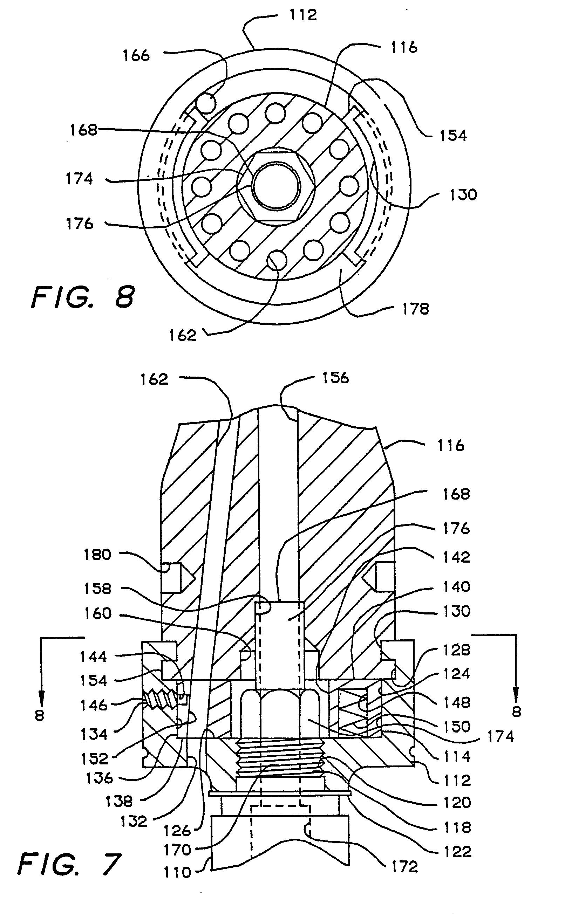

Referring now to Figure 2, 7, and 8, but more particularly to Figures 7 and 8, the parison molding portion 20 includes a plunger rod 110, a plunger head 112 that is attached to the plunger rod 110, a pressure ring 114 that is disposed in the plunger head 112, and a parison plunger 116 that is attached to the plunger head 112.

The plunger rod 110 includes an externally threaded portion 118; and internal threads 120 of the plunger head 112 engage the threaded portion 118. A lockwasher 122 cooperates with the threaded portion 118 and the internal threads 120 to secure the plunger head 112 to the plunger rod 110.

The plunger head 112 includes a bore 124 having a bottom surface 126, a retainer groove 128, retaining lips 130, a plurality of vertically disposed and circumferentially spaced exhaust holes 132, and a plurality of circumferentially spaced and threaded set screw holes 134.

The pressure ring 114 includes an outer diameter 136 that is slidably inserted into the bore 124, a bottom surface 138 that is juxtaposed to the bottom surface 126 of the plunger head 112, a top surface 140, a bore 142, and set screw depressions 144 that are circumferentially spaced to coincide with the circumferential spacing of the threaded set screw holes 134. Dog point set screws 146 are inserted into the set screw holes 134 and engage the set screw depressions 144.

The pressure ring 114 includes a plurality of spring receiving bores 148 that are circumferentially spaced and that extend upwardly from the bottom surface 138. A plurality of springs 150 are inserted into the bores 148 and press both upwardly on the pressure ring 114 and downwardly on the plunger head 112.

Upward movement of the pressure ring 114 is restricted by the set screws 146 and by the set screw depressions 144, the set screw depressions 144 being sufficiently large to allow a limited amount of upward movement of the pressure ring 114.

The pressure ring 114 includes a plurality of circumferentially spaced seocnd exhaust holes 152 that are indexed by the set screws 146 to align with the first exhaust holes 132 of the plunger head 112.

The parison plunger 116 includes a pair of second retaining lips 154 that retainably engage the first retaining lips 130 of the plunger head 112.

The parison plunger 116 includes a longitudinal exhaust hole 156, a first counterbore 158 that is coaxial with the longitudinal exhaust hole 156, and a second counterbore 160 that is coaxial with the longitudinal exhaust hole 156.

A plurality of third exhaust holes 162 are circumferentially spaced around the parison plunger 116; each of these third exhaust holes 162 slope radially inward and make fluid communication with the longitudinal exhaust hole 156 at an end 164 of the longitudinal exhaust hole 156, as shown in Figure 2; and the third exhaust holes 162 register with the second exhaust holes 152. Thus, registering of the third exhaust holes 162 with the second exahust holes 152 is achieved by means of an indexing pin 166 in the plunger head 112 that engages one of the second retaining lips 154, as can be seen in Figure 8.

Continuing to refer to Figures 7 and 8, the parison molding portion 20 includes a connector tube 168 having a threaded portion 170 that threadingly engages a plunger rod bore 172 of the plunger rod 110, having a hexagonal portion 174, and having a tubular portion 176 that slidingly engages the first counterbore 158 of the longitudinal exhaust hole 156.

Thus the connector tube 166 serves as a means of conducting exhaust air from the plunger rod bore 172 of the plunger rod 110 to the exhaust hole 156 of the parison plunger 116.

To assemble the parison plunger 116 into the plunger head 112, the second retaining lips 154 of the parison plunger 116 are indexed into spaces 178 that are disposed intermediate of the first retaining lips 130, the parison plunger 116 is pressed downwardly against the pressure ring 114, depressing the springs 150, and the parison plunger 116 is rotated clockwise, as seen in Figure 8, until one of the second retaining lips 154 engages the indexing pin 166, a pair of spanner wrench holes 180 are circumferentially spaced around the parison plunger 116 and may be used in achieving the aforesaid clockwise rotation of the parison plunger 116.

Referring now to Figure 1, in a first step of the operation of the parison molding portion 20, the baffle 26 has been removed from the parison mold 22, the parison mold halves 24a and 24b are separated, the neck ring 28 has been returned from the blow mold portion, not shown, of the glass molding machine, the plunger head 112 is down against a positioning spacer or spacer tube 182, the parison plunger 116 is at its lowermost position, and the aligning sleeve 96 is in its lowermost position, as determined by the spacer tube 182; wherein the aligning sleeve 96 is not engaging the neck ring 28.

Radial alignment of the aligning sleeve 96 with the upper receiver cap 40 is by means of sliding fit of the cylindrically shaped portion 98 of the aligning sleeve 96 with the guide bore 100 of the upper receiver cap 40; and radial alignment of the parison plunger 116 with the aligning sleeve 96 is by means of sliding contact between a cylindrical surface 183 of the plunger head 112 and a cylindrical bore 184 of the aligning sleeve.

Referring now to Figure 2, in a second step of the operation of the parison molding portion 20, the aligning sleeve 96 has been raised and has been inserted into the guide bore 108 of the neck ring 28 by the force of the loading position spring 104, and the parison plunger 116 has been raised to the loading position by the spacer tube 182 and by the force of the loading position spring 104.

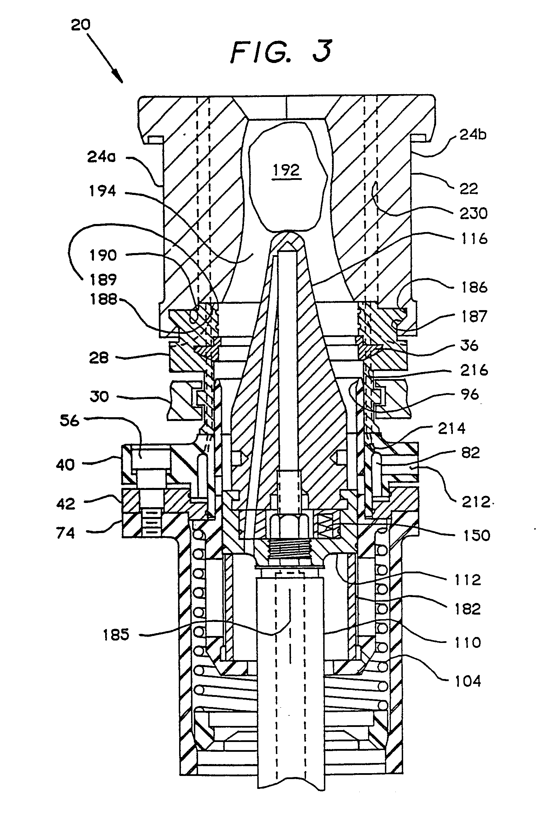

Referring now to Figure 3, in a third step of the operation of the parison molding portion 20, the parison mold halves 24a and 24b have been closed around a vertical axis, or central axis, 185 of the parison molding portion 20; and the neck ring 28 is clamped both between and against the parison mold halves 24a and 24b by a circumferential groove 186 of the parison mold halves 24a and 24b.

As shown in Figure 3, the circumferential groove 186 includes a first frustoconical surface 187, engages a second frustoconical surface 188 of the neck ring 28, forcing a surface 189 of the neck ring 28 into engagement with a surface 190 of the mold halves 24a and 24b.

Also, as shown in Figure 3, a gob 192 of molten glass has been deposited inside a mold chamber 194 of the parison mold 22.

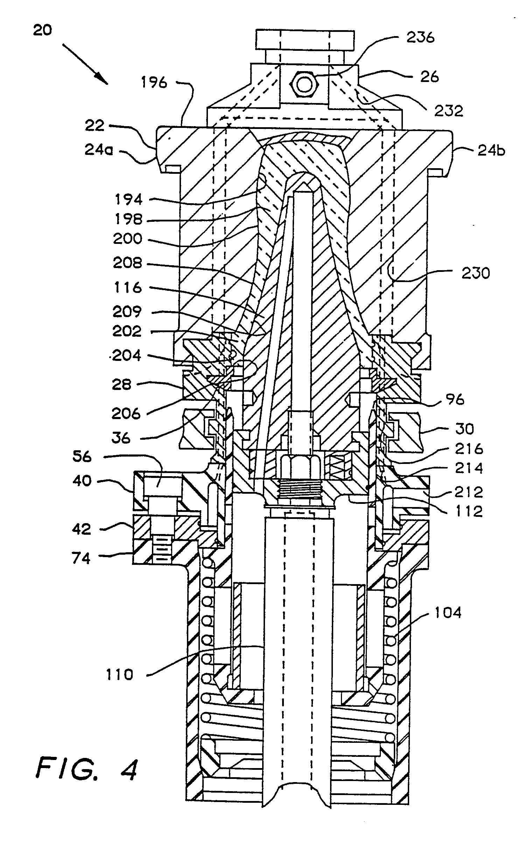

Referring now to Figure 4, in a fourth step of the operation of the parison molding portion 20, the baffle 26 has been placed upon a top surface 196 of the parison mold 22, closing the mold chamber 194, and the parison plunger 116 has been forced upwardly by the plunger rod 110 and by a pneumatic cylinder, not shown, forming a parison 198 from the gob 192 of Figure 3.

The parison 198 includes an outer contour 200 having a finish portion 202 that conforms to both an inner surface 204 of the neck ring 28 and a seating lip surface 206 of the finish guide ring 36, having a container portion 208 that conforms to the shape of the mold chamber 194, and having an interior surface 209 that conforms to the shape of the parison plunger 116.

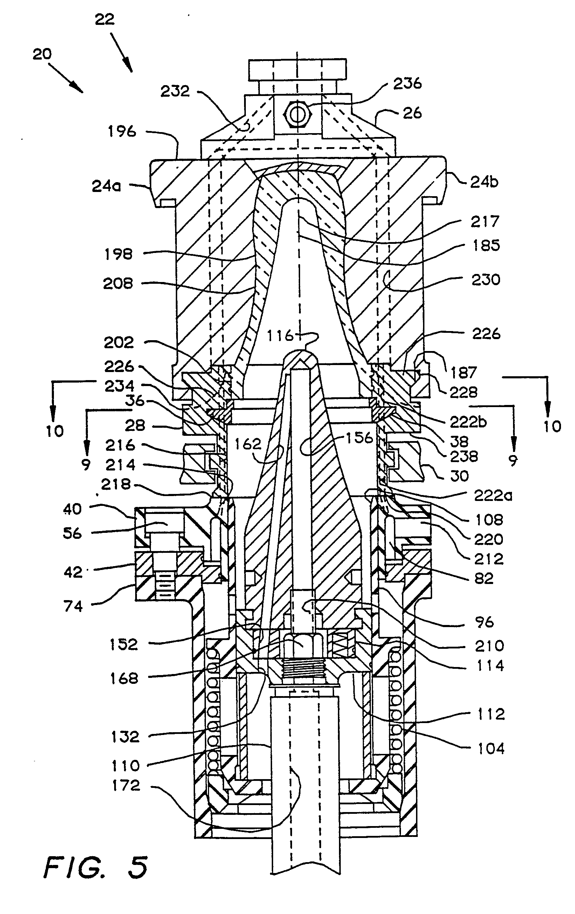

Referring now to Figure 5, in a fifth step of the operation of the parison molding portion 20, the parison plunger 116 has been pulled downward and out of the parison 198 and into its lowermost position by the plunger rod 110 and by the pneumatic cylinder, not shown; and the aligning sleeve 96 has been pulled downward and out of the neck ring 28 by the plunger rod 110 and by the pneumatic cylinder.

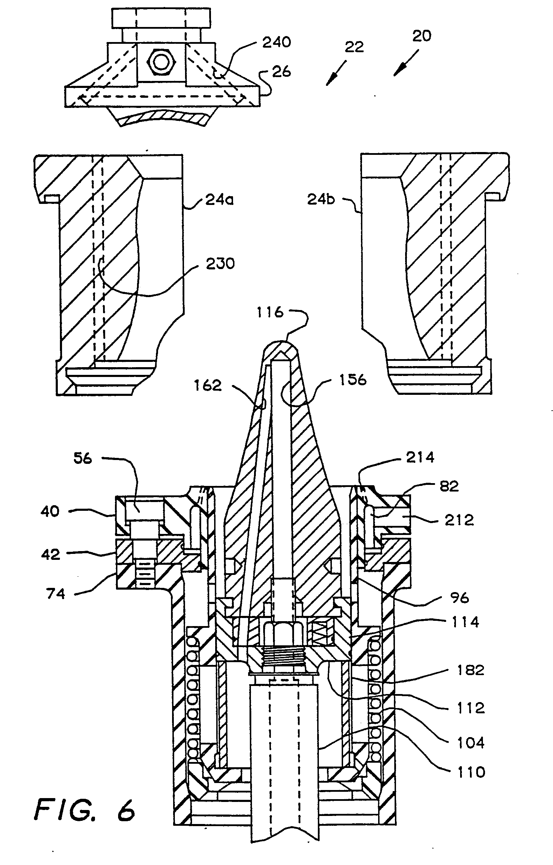

Referring now to Figure 6, in a sixth and final step of the operation of the parison molding portion 20, the baffle 26 has been removed from the parison mold 22, the parison mold halves 24a and 24b have been opened, and both the parison 198 and the neck ring 28 have been transferred to the blow mold portion, not shown, of the glassware molding machine by the neck ring holder 30.

Referring now to Figures 1—10, but more particularly to Figure 5, cooling of the parison plunger 116 is accomplished by supplying air through the plunger rod bore 172. This air is supplied to the plunger rod bore 172 through the pneumatic cylinder; and the plunger rod 110 is an integral part of the pneumatic cylinder.

Pneumatic cylinders for use in individual glassware molding machines commonly include a first cylinder port that is used to supply air for moving the plunger rod 110 upwardly, a second port that is used to supply air for moving the plunger rod 110 downwardly, and a third port that communicates with the plunger rod 110 at all times by means of a telescoping tube which enters the bottom of the pneumatic cylinder. This type of pneumatic cylinder is a standard production item and is not a part of the present invention.

The air that is furnished to the plunger rod 110 moves upwardly through the plunger rod bore 172 of the plunger rod 110, through an opening 210 in the connector tube 168, through the longitudinal exhaust hole 156 of the parison plunger 116, downward through the third exhaust holes 162 of the parison plunger 116, through the second exhaust holes 152 of the pressure ring 114, and downward through the first exhaust holes 132 of the plunger head 112.

It is well known that in production of high quality glassware two steps are required informing glassware from a gob of molten glass: first, a gob of molten glass is formed at one station into a parison or blank by pressing the gob in a parison blank mold, and then at a second separate station formed into a final shape by means of a blow mold. The subject invention relates to effective cooling in the first station side of this process, that is, the parison or blank mold side. There are particular problems regarding effective temperature control associated especially with that side of the process as opposed to the blow mold side that stem from dimensional limitations.

There have been many approaches in attempting to control cooling of molding components in glassware forming machines that have been tried in the past but they have been of limited success due, it is believed, to essentially not allowing sufficient cooling conditions to prevail and not providing uniform temperature conditions for molding surfaces for control of container quality.

The subject invention allows for a better formed container, especially in the neck or finish portion thereof in that said finish surface is substantially flatter or planar in the terminal configuration as well as having a truer circular configuration for the opening at the mouth of the container. Optimum conditions are necessary in the forming phase for that portion of the container in order to permit a closure to fit snugly and firmly thereover.

Referring now to Figures 5, 9, and 10, cooling of the neck ring 28 and the parison mold 22 is accomplished by supplying air to a port 212 of the upper receiver cap 40 and into the air manifold 82 that is formed by the upper receiver cap 40 and the lower receiver cap 42.

The air that is supplied to the manifold 82 flows upwardly through a plurality of first cooling holes, or first array of internal passageways, 214 that are circumferentially spaced and that are vertically disposed in the upper receiver cap 40. The cooling holes 214 in the upper receiver cap 40 register with a plurality of second cooling holes, or second array of internal passageways, 216 that are circumferentially spaced around a ring axis 217 of the neck ring 28 and that are vertically disposed therein.

When the neck ring holder 30 returns the neck ring 28 from the blow molding portion, not shown, to the parison molding portion of the glassware molding machine, the neck ring holder 30 places the neck ring 28 on the upper receiver cap 40 with the ring axis 217 thereof substantially concentric with the central axis 185; and the cooling holes 216 are concentric with respective ones of the cooling holes 214.

The second cooling holes 216 are larger in diameter than the first cooling holes 214 so that there is a jet effect of the air flowing from the first cooling holes 214 into the second cooling holes 216. This jet effect assists in preventing the cooling air from escaping between a top surface 218 of the upper receiver cap 40 and a bottom surface 220 of the neck ring 28.

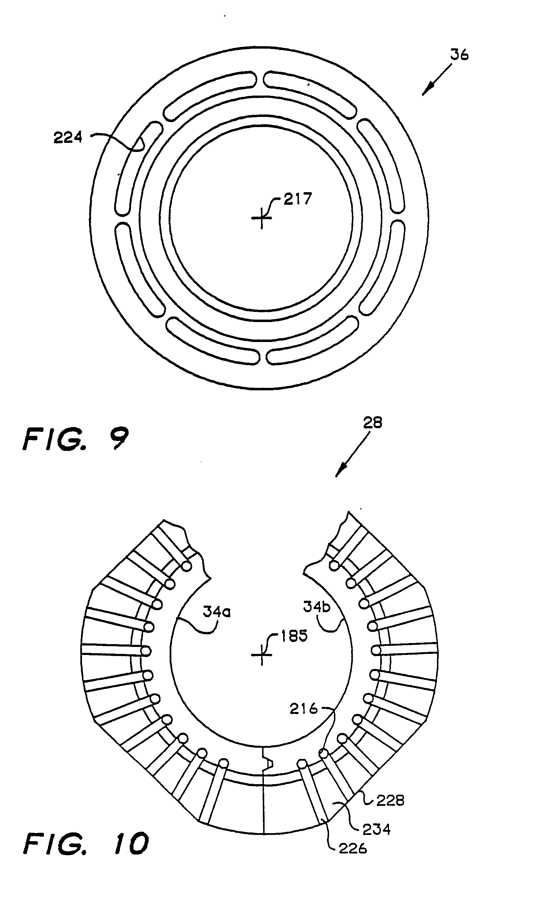

The second cooling holes 216 are divided into cooling hole portions 222a and 222b by the internal groove 38 in the neck ring 28. Flow of cooling air upwardly from the cooling hole portions 222a, through the finish guide ring 36, and into the cooling hole portion 222b is by means of a plurality of cooling slots 224, that are vertically disposed, and that are circumferentially spaced around the finish guide ring 36, as shown in Figure 9.

A portion of the cooling air that has progressed upward through the second cooling holes 216 of the neck ring 28 is discharged through a plurality of circumferentially spaced and radially disposed cooling notches 226 that cut into the surface 188 of the neck ring 28 and into an outer periphery 228 of the neck ring 28.

The remainder of the cooling air flowing upward through the second cooling holes 216 flows into a plurality of third cooling holes, or third array of internal passageways, 230 that are circumferentially disposed around the parison mold 22 and that are vertically disposed therein. This remainder of the cooling air exits through the top surface 196 of the parison mold 22 and is exhausted through a plurality of fourth cooling holes, or fourth array of internal passageways, 232 that are disposed in the baffle 26.

Thus the neck ring 28 is cooled by air flowing through the cooling hole portions 222a of the second cooling holes 216, through the cooling slots 224 of the finish guide ring 36, through the cooling hole portions 222b of the second cooling holes 216, and through the cooling notches 226. The flow of air through the cooling notches 226 provides cooling for the neck ring 28 by means of a plurality of cooling fins 234 that are formed by, and that are disposed circumferentially intermediate of, the cooling notches 226, as shown in Figure 10.

It has been found advantageous to employ control valve means 236 in conjunction with the aforementioned mold baffle 26. In this regard a baffle control valve which is either automatic and responsive to temperature could be used or a manual valve which can be adjusted by an operator in conjunction with the passageways associated with the baffle may also be readily used in order to control the proper amount or degree of cooling.

In summary, the parison plunger 116 of the parison molding portion 20 is cooled by air that flows upwardly through a longitudinal exhaust hole 156 and that flows downwardly through a plurality of third exhaust holes 162.

The neck ring 28 is cooled by a plurality of second cooling holes 216 that are circumferentially spaced and that are vertically disposed; and the neck ring 28 is also cooled by a plurality of cooling notches 226 and by a plurality of cooling fins 234 that are disposed circumferentially intermediate of the cooling notches 226.

Because the plurality of second cooling holes 216 in the neck ring 28 may be positioned closer to the inside surface 108 of the neck ring 28 and still retain sufficient strength and rigidity, than could longitudinally disposed slots opening through an outside surface 238 of the neck ring 28, the cooling holes 216 are more effective in cooling the neck ring 28 than the slots of the prior art.

The parison mold 22 is cooled by a portion of the air from the second cooling holes 216 of the neck ring 29 being directed upwardly through a plurality of third cooling holes 230 that are circumferentially spaced and that are vertically disposed in the mold 22.

Thus it is apparent that, since the entire cooling air is used to cool the neck ring 28, but only a portion of the air is used to cool the mold 22, greater cooling is provided for neck ring 28.

Referring now to Figure 3, communication of cooling air with the second plurality of cooling holes 216 is made by the upper receiver cap 40 being resiliently urged upward against the neck ring 28 by a resilient urging force that is created by air pressure in the receiver cap manifold 82; but the neck ring 28 is allowed to move downwardly and to rest down against the neck ring holder 30 by the resiliency, and limited force, of this resilient urging force.

Thus, when the parison mold halves 24a and 24b close, they can close without interference between the surface 189 of the parison mold 22 and the surface 190 of the neck ring 28; because the neck ring 28 is resting down against the neck ring holder.

Then, as the neck ring 28 is raised and clamped against the parison mold 22 by the first frustoconical surface 187, the resilient urging force of air pressure in the receiver cap manifold 82 is effective to raise the upper receiver cap 40 and to maintain contact between the upper receiver cap 40 and the neck ring 28, thereby continuing fluid communication between the first plurality of cooling holes 214 and the second plurality of cooling holes 216 as communication is established from the second plurality of cooling holes 216 in the neck ring 28 to the third plurality of cooling holes 230 in the parison mold 22 by the clamping action of the first frustoconical surface 187.

The results are that cooling of the neck ring 28 is continuous wherever the neck ring is on the parison molding portion 20 of the individual section glassware molding machine, which is about 80% of the total cycle time; and that cooling of the parison mold 22 is continuous whenever the parison mold halves 24a and 24b are closed.

Therefore, greater cooling is provided for the neck ring 28 than for the parison mold 22, not only by virtue of all of the cooling air being directed through the second plurality of cooling holes 216 as opposed to only a part of the cooling air being directed through the third plurality of cooling holes 230, but also by virtue of the cooling air being directed through the second plurality of cooling holes 216 for a greater percentage of the time than the cooling air is directed through the third plurality of cooling holes 230.

Thus the objective of the present invention, that is, greater cooling of the neck ring 28 than of the mold 22, has been achieved: and the resulting parison 198 will have a finish portion 202 that is cooler than the container portion 208.

The results are that the finish portion 202 of the parison 198 has sufficient mechanical strength and dimensional stability to withstand forces imparted upon the finish portion 202 in the blow molding operation; and the container portion 208 retains sufficient heat and plasticity to allow blow molding of the container, not shown, into the completed shape.

While specific apparatus has been disclosed in the preceding description, it should be understood that these specifics have been given for the purpose of disclosing the principles of the present invention and that many variations thereof will become apparent to those who are versed in the art. Therefore, the scope of the present invention is to be determined by the appended claims.

Industrial applicability

The present invention is applicable to individual glassware molding machines of the type having a parison molding portion in which a parison with both a finish portion and a container portion is formed, and having a blow mold portion to which the parison is transferred, held by the finish portion of the parison, and blown into a completed container.

**Claims**

1. A parison molding portion (20) of an individual glassware molding machine, of the type having a parison mold (22), a neck ring (28), a receiver (40, 42) and means for cooling the neck ring (28) and the parison mold (22), said means for cooling include a plurality of cooling passages (216) for cooling the neck ring (28), characterized in that said means for cooling the neck ring (28) and the parison mold (22) includes a plurality of cooling passages (214) in the receiver (40, 42) that communicate with the cooling passages (216) provided in the neck ring (28).

2. A parison molding portion (20) according to claim 1, characterized by a plurality of cooling passages (230) in the parison mold (22) that communicate with the plurality of cooling passages (216) in the neck ring (28).

3. A parison molding portion (20) of an individual section glassware molding machine for pressing a gob of molten glass into a blank mold by means of a plunger (116) inserted into an associated parison and neck mold to form a parison having a body portion and an integral finished neck portion, said parison molding portion (20) comprises:

a parison mold (22) being disposed around a central axis that is substantially vertical, and having a lower surface that is disposed substantially orthogonal to said central axis;

a receiver (40, 42) being disposed circumferentially around said central axis, having a top surface that is disposed substantially orthogonal to said central axis;

a neck ring (28) having a ring axis, having a first surface that is disposed substantially orthogonal to said ring axis, having a second surface that is disposed substantially parallel to said first surface and that is spaced apart therefrom, and having an array of passageways (216) that are disposed substantially parallel to said ring axis, that are spaced circumferentially around said ring axis;

neck ring holder means (30) for receiving and retaining said neck ring (28), for transferring said neck ring (28) and a parison from said parison molding portion (20) of said individual section glassware molding machine to a blow mold portion thereof, for returning said neck ring (28) to said parison molding portion (20) with said neck ring (28) disposed intermediate of said receiver (40, 42) and said parison mold (22), with said ring axis and said central axis substantially coinciding, and with said first surface of said neck ring (28) disposed downwardly, for supporting said neck ring (28), and for allowing limited movement of said neck ring (28) along said ring axis;

characterized in that

said parison mold (22) has first and second mold portions (24a, 24b) that are transversely separable from said central axis and that are transversely closeable to form said parison mold (22);

said receiver (40, 42) has a fluid carrying passage (82) therein that is disposed circumferentially around said central axis, and has a first array of internal passageways (214) that are spaced circumferentially around said central axis and that communicate said fluid carrying passage (82) to said top surface;

said second array of passageways (216) of said neck ring (28) are internal passageways (216) that intercept both said first surface and said second surface; and

means is provided for resiliently urging said top surface of said receiver (40, 42) upwardly and into contact with said neck ring (28) when said neck ring holder means (30) returns said neck ring (28) to said parison molding portion (20).

4. A parison molding portion (20) according to claim 3, characterized in that said receiver (40, 42) comprises an upper receiver cap (40), a lower receiver cap (42), means (44, 46, 50, 52) for telescopically connecting said upper receiver cap (40) and said lower receiver cap (42), means (48, 54) for substantially sealing said telescopic connection (44, 46, 50, 52);

said parison molding portion (20) includes an air powered actuator, comprising said fluid carrying passage (82) of said receiver (40, 42), and comprising said telescopic connection (44, 46, 50, 52) of said upper receiver cap (40) and said lower receiver cap (42); and

said means for resiliently urging said top surface of said receiver upwardly and into contact with said first surface of said neck ring (28) comprises said air powered actuator.

5. A parison molding portion (20) according to claim 3 or 4, characterized in that said means for resiliently urging said top surface upwardly and into contact with said neck ring (28) comprises means for allowing said neck ring (28) to be forced downwardly toward said neck ring holder means (30).

6. A parison molding portion (20) according to claim 3, 4 or 5, characterized in that said mold portions (24a, 24b) include clamping means, comprising a circumferential groove (186) for clamping said second surface of said neck ring (28) to said lower surface of said parison mold (22) when said mold portions (24a, 24b) close.

7. A parison molding portion (20) according to anyone of claims 3 to 6, characterized in that said parison mold (22) includes a third array of internal passageways (230) that are disposed substantially parallel to said central axis, that are circumferentially spaced around said central axis, that open through said lower surface, and that communicate with said second array of internal passageways (216) when said neck ring (28) is clamped against said parison mold (22).

8. A parison molding portion (20) according to anyone of claims 3 to 7, characterized in that said receiver (40, 42) comprises an upper receiver cap (40), a lower receiver cap (42), means (44, 46, 50, 52) for telescopically connecting said upper receiver cap (40) and said lower receiver cap (42), and means (48, 54) for substantially sealing said telescopic connection (44, 46, 50, 52);

said parison molding portion (20) includes an air powered actuator, comprising said fluid carrying passage (82) of said receiver (40, 42) and comprising said telescopic connection (44, 46, 50, 52) of said upper receiver cap (40) and said lower receiver cap (42); and

said means for resiliently urging said top surface of said receiver (40, 42) upwardly and into contact with said first surface of said neck ring (28), and for resiliently allowing said neck ring (28) to force said receiver (40, 42) downwardly comprises said air powered actuator.

9. A parison molding portion (20) according to claims 7 or 8, characterized in that said neck ring (28) includes bypassing means for bypassing a portion of said fluid external of said parison molding portion (20) prior to entry of said fluid into said third array of internal passageways (230).

10. A parison molding portion (20) according to claim 7, 8 or 9, characterized in that said parison mold (22) includes an upper surface;

said third array of internal passageways (230) extend upwardly through said upper surface;

said parison molding portion (20) includes baffle means (26) for closing said parison mold (22) by contact with said upper surface of said parison mold (22);

said baffle means (26) includes a fourth array of passageways (232) that communicate with said third array of internal passageways (230) and that extend outwardly through said baffle means (26); and

said baffle means (26) includes valve means (236) for controlling fluid exiting from said fourth array of passageways (232).

11. A parison molding portion (20) according to anyone of claims 3 to 10, characterized in that said means for allowing said neck ring (28) to be forced downwardly toward said neck ring holder means (30) comprises means for allowing said neck ring holder means (30) to be forced downwardly by the weight of said neck ring (28) and to be supported by said neck ring holder means (30).

12. A parison molding portion (20) according to anyone of claims 3 to 11, characterized in that said clamping means comprises means (186) for lifting said neck ring (28) from said support of said neck ring holder means (30).

13. A parison molding portion (20) according to anyone of claims 3 to 12, characterized in that said neck ring (28) includes an internal groove (38) that divides said second array of internal passageways (216) into two separate cooling hole portions (222a, 222b);

said parison molding portion (20) includes a finish guide ring (36) that is disposed in said internal groove (38); and

said finish guide ring (36) includes intermediate passageway means (224), for intercommunicating respective ones of said separate cooling hole portions (222a, 222b).

14. A parison molding portion (20) as claimed in Claim 13, characterized in that said intermediate passageway means (224) comprises a plurality of arcuately shaped slots that are disposed substantially parallel to said central axis.

15. A process of cooling mold portions during the forming of molten glass in a parison molding assembly to form a parison by means of a plunger (116) inserted along a central axis into associated neck ring (28) and blank molding means (20) to define a finish neck portion (204) and an integral body blank portion (194), which comprises:

a) providing an array of passageways (216) for cooling said neck ring (28), that are disposed substantially longitudinally along said central axis, and that are circumferentially spaced around said central axis;

b) communicating a fluid with said array of passageways (216) for cooling said neck ring (28);

c) providing a receiver (40, 42); and

d) disposing said receiver (40, 42) around said central axis with a top surface thereof proximal to said neck ring (28);

characterized in that said step of communicating a fluid with said array of passageways (216) for cooling said neck ring (28) comprises:

1) providing said array of passageways (216) in said neck ring (28) as internal passageways (216), that extend through said neck ring (28) from a first surface thereof to a second surface thereof;

2) communicating said fluid with said internal passageways (216) proximal to said first surface;

3) disposing said top surface of said receiver (40, 42) proximal to said first surface of said neck ring (28);

4) providing a receiver cap manifold (82) in said receiver (40, 42) that is spaced apart from said top surface and that is disposed circumferentially around said central axis;

5) providing an array of internal passageways (216) that open from said receiver cap manifold (82) through said top surface or said receiver (40, 42), that are circumferentially spaced around said central axis, and that are positioned to communicate with said array of internal passageways (216) in said neck ring (28); and

6) juxtaposing said top surface of said receiver (40, 42) against said first surface of said neck ring (28).

16. A process according to claim 15, characterized in that said step of juxtaposing of said top surface of said receiver (40, 42) against said first surface of said neck ring (28) comprises resiliently urging said top surface of said receiver (40, 42) against said first surface of said neck ring (28).

17. A process according to claim 16, characterized in that said step of resiliently urging said top surface of said receiver (40, 42) against said first surface of said neck ring (28) comprises providing a fluid actuator.

18. A process according to claim 17, characterized in that said step of providing a fluid actuator comprises adapting cooperating portion of said receiver (40, 42) to serve as said fluid actuator.

19. A process according to claim 18, characterized in that said step of adapting cooperating portions of said receiver (40, 42) to serve as said fluid actuator comprises adapting said receiver cap manifold (82) as a part of said fluid actuator;

said step of resiliently urging said top surface of said receiver (40, 42) against said first surface of said neck ring (28) comprises communicating said fluid to said receiver cap manifold (82); and

said step of communicating fluid to said second array of internal passageways (216) comprises said communicating said fluid to said receiver cap manifold (82).

20. A process according to anyone of claims 15 to 19, characterized in that said process comprises allowing said neck ring (28) to be forced downwardly toward said neck ring holder (30).

21. A process according to anyone of claims 15 to 20, characterized in that said process comprises clamping said neck ring (28) against said blank molding means (20).

22. A process according to claim 21, characterized in that said process comprises:

a) providing a third array of internal passageways (230) in said blank molding means (20) that are disposed substantially parallel to said central axis and that are spaced circumferentially around said central axis; and

b) communicating said second array of internal passageways (216) in said neck ring (28) to said third array of internal passageways (230) when said neck ring (28) is clamped against said blank molding means (20).

23. A process according to claim 22, characterized in that said process comprises bypassing a portion of said fluid external to said neck ring (28) prior to entry of said fluid into said third array of internal passageways (230).

24. A process according to claim 22 or 23, characterized in that said process comprises:

a) providing a fourth array of passageways (232);

b) communicating said third array of internal passageways (230) with said fourth passageways (232);

c) providing a valve (236); and

d) communicating said fourth array of passageways (232) external to said assembly thorugh said valve (236).

25. A process according to anyone of claims 15 to 24, characterized in that said process comprises:

a) providing a groove (38) that bisects said array of internal passageways (216) in said neck ring (28);

b) inserting a finish guide ring (36) in said groove (38);

c) providing a plurality of slots (224) through said guide ring (36); and

d) intercommunicating respective ones of said bisected passageways (222a, 222b) thorugh said slots (224).

26. A process according to claims 20 and 21, characterized in that said step of allowing said neck ring (28) to be forced downwardly toward said neck ring holder means (30) comprises allowing said neck ring (28) to be forced downwardly by the wieght of said neck ring (28) and to be supported by said neck ring holder (30); and

said clamping step comprises lifting said neck ring (28) from said support of said neck ring holder (30).

**Patentansprüche**

1. Külbchenformteil (20) einer einzelnen Glasartikelformmaschine der Art, die eine Külbchenform (22), einen Halsring (28), einen Aufnehmer (40, 42) und eine Einrichtung zum Kühlen des Halsrings (28) und der Külbchenform (22) hat, wobei die Einrichtung zum Kühlen eine Mehrzahl von Kühlkanälen (216) für das Kühlen des Halsrings (28) aufweist, dadurch gekennzeichnet, daß die Einrichtung zum Kühlen des Halsrings (28) und der Külbchenform (22) eine Mehrzahl von Kühlkanälen (214) in dem Aufnehmer (40, 42), die mit den in dem Halsring (28) vorgesehenen Kühlkanälen (216) in Verbindung stehen, aufweist.

2. Külbchenformteil (20) nach Anspruch 1, gekennzeichnet durch eine Mehrzahl von Kühlkanälen (230) in der Külbchenform (22), die mit der Mehrzahl von Kühlkanälen (216) in dem Halsring (28) in Verbindung stehen.

3. Külbchenformteil (20) einer Einzelabschnitts-Glasartikelformmaschine für das Pressen eines Klumpens von geschmolzenem Glas in eine Rohlingsform mittels eines Preßkolbens (116), der in eine zugeordnete Külbchen- und Halsform eingefügt ist, um eine Külbchen zu formen, das einen Körperteil und einen integralen fertiggestellten Halsteil hat, wobei der Külbchenformteil (20) folgendes umfaßt:

eine Külbchenform (22), die um eine mittige Achse herum, welche im wesentlichen vertikal ist, angeordnet ist und eine untere Oberfläche hat, welche im wesentlichen senkrecht zu der mittigen Achse angeordnet ist;

einen umfangsmäßig um die mittige Achse herum angeordneten Aufnehmer (40, 42), der eine obere Oberfläche hat, die im wesentlichen senkrecht zu der mittigen Achse angeordnet ist;

einen eine Ringachse aufweisenden Halsring (28), der eine erste Oberfläche hat, die im wesentlichen senkrecht zu der Ringachse angeordnet ist, der eine zweite Oberfläche hat, die im wesentlichen parallel zu der ersten Oberfläche und im Abstand von derselben angeordnet ist, und der eine Anordnung von Kanälen (216) hat, die im wesentlichen parallel zu der Ringachse angeordnet sind, und die in Umfangsrichtung um die Ringachse im Abstand angeordnet sind;

eine Halsringhaltereinrichtung (30) zum Aufnehmen und Halten des Halsrings (28), zum Überführen des Halsrings (28) und eines Külbchens von dem Külbchenformteil (20) der Einzelabschnitts-Glasartikelformmaschine zu einem Glasformungsteil derselben, für das Zurückbringen des Halsrings (28) zu dem Külbchenformteil (20), wobei der Halsring (28) zwischen dem Aufnehmer (40, 42) und der Külbchenform (22) liegend angeordnet ist, wobei die Ringachse und die mittige Achse im wesentlichen Übereinstimmen, und wobei die erste Oberfläche des Halsrings (28) zum Halten des Halsrings (28) und zum Ermöglichen einer beschränkten Bewegung des Halsrings (28) längs der Ringachse nach abwärts angeordnet ist;

dadurch gekennzeichnet, daß

die Külbchenform (22) einen ersten und zweiten Formteil (24a, 24b) hat, die quer von der mittigen Achse trennbar sind und die zum Bilden der Külbchenform (22) quer schließbar sind;

der Aufnehmer (40, 42) einen fluidleitenden Kanal (82) darin hat, der umfangsmäßig um die mittige Achse angeordnet ist, und eine erste Anordnung von internen Kanälen (214) hat, die umfangsmäßig im Abstand um die mittige Achse angeordnet sind und mit dem fluidleitenden Kanal (82) zu der oberen Oberfläche in Verbindung stehen;

die zweite Anordnung von Kanälen (216) des Halsrings (28) interne Kanäle (216) sind, die sowohl die erste Oberfläche als auch die zweite Oberfläche unterbrechen; und

eine Einrichtung zum elastischen Drängen der oberen Oberfläche des Aufnehmers (40, 42) aufwärts und in Kontakt mit den Halsring (28), wenn die Halsringshaltereinrichtung (30) den Halsring (28) zu dem Külbchenformteil (20) zurückbringt, vorgesehen ist.

4. Külbchenformteil (20) nach Anspruch 3, dadurch gekennzeichnet, daß der Aufnehmer (40, 42) eine obere Aufnehmerkappe (40), eine untere Aufnehmerkappe (42), eine Einrichtung (44, 46, 50, 52) zum teleskopischen Verbinden der oberen Aufnehmerkappe (40) und der unteren Aufnehmerkappe (42), und eine Einrichtung (48, 52) zum im wesentlichen Abdichten der teleskopischen Verbindung (44, 46, 50, 52) umfaßt;

wobei der Külbchenformteil (20) einen luftbetriebenen Betätiger aufweist, umfassend den fluidleitenden Kanal (82) des Aufnehmers (40, 42) und umfassend die teleskopische Verbindung (44, 46, 50, 52) der oberen Aufnehmerkappe (40) und der unteren Aufnemherkappe (42); und

wobei die Einrichtung zum elastischen Drängen der oberen Oberfläche des Aufnehmers nach aufwärts und in Kontakt mit der ersten Oberfläche des Halsrings (28) den luftbetriebenen Betätiger umfaßt.

5. Külbchenformteil (20) nach Anspruch 3 oder 4, dadurch gekennzeichnet, daß die Einrichtung zum elastischen Drängen der oberen Oberfläche nach aufwärts und in Kontakt mit dem Halsring (28) eine Einrichtung umfaßt, welche es ermöglicht, den Halsring (28) abwärts nach der Halsringhaltereinrichtung (30) zu forcieren.

6. Külbchenformteil (20) nach Anspruch 3, 4 oder 5, dadurch gekennzeichnet, daß die Formteile (24a, 24b) eine Klemmeinrichtung aufweisen, umfassend eine Umfangsnut (186) zum Klemmen der zweiten Oberfläche des Halsrings (28) an die untere Oberfläche der Külbchenform (22), wenn sich die Formteile (24a, 24b) schließen.

7. Külbchenformteil (20) nach irgendeinem der Ansprüche 3 bis 6, dadurch gekennzeichnet, daß die Küllchenform (22) eine dritte Anordnung von internen Kanälen (230), die im wesentlichen parallel zu der mittigen Achse angeordnet sind, die umfangsmäßig im Abstand um die mittige Achse angeordnet sind, die durch die untere Oberfläche münden, und die mit der zweiten Anordnung von internen Kanälen (216) in Verbindung stehen, wenn der Halsring (28) gegen die Külbchenform (22) geklemmt ist, aufweist.

8. Külbchenformteil (20) nach irgendeinem der Ansprüche 3 bis 7, dadurch gekennzeichnet, daß der Aufnehmer (40, 42) eine obere Aufnehmerkappe (40), eine untere Aufnehmerkappe (42), eine Einrichtung (44, 46, 50, 52) zum teleskopischen Verbinden der oberen Aufnehmerkappe (40) und der unteren Aufnehmerkappe (42), und eine Einrichtung (48, 54) zum im wesentlichen Abdichten der teleskopischen Verbindung (44, 46, 50, 52) umfaßt;

wobei der Külbchenformteil (20) einen luftbetriebenen Betätiger aufweist, umfassend den fluidleitenden Kanal (82) des Aufnehmers (40, 42) und umfassend die teleskopische Verbindung (44, 46, 50, 52) der oberen Aufnehmerkappe (40) und der unteren Aufnehmerkappe (42); und

wobei die Einrichtung zum elastischen Drängen der oberen Oberfläche des Aufnehmers (40, 42) nach aufwärts und in Kontakt mit der ersten Oberfläche des Halsrings (28) und zum elastischen Ermöglichen des Halsrings (28), den Aufnehmer (40, 42) nach abwärts zu forcieren, den luftbetriebenen Betätiger umfaßt.

9, Külbchenformteil (20) nach Anspruch 7 oder 8, dadurch gekennzeichnet, daß der Halsring (28) eine Nebenschlußeinrichtung zum Nebenschließen eines Teils des Fluids extern von den Külbchenformteil (20) vor den Eintritt des Fluids in die dritte Anordnung von internen Kanälen (230) aufweist.

10. Külbchenformteil (20) nach Anspruch 7, 8 oder 9, dadurch gekennzeichnet, daß die Külbchenform (22) eine obere Oberfläche aufweist:

wobei sich die dritte Anordnung von internen Kanälen (230) nach aufwärts durch die obere Oberfläche erstreckt;

wobei der Külbchenformteil (20) eine Wandeinrichtung (26) zum Schließen der Külbchenform (22) durch Kontakt mit der oberen Oberfläche der Külbchenform (22) aufweist;

wobei die Wandeinrichtung (26) eine vierte Anordnung von Kanälen (232) aufweist, die mit der dritten Anordnung von internen Kanälen (230) in Verbindung stehen und die sich auswärts durch die Wandeinrichtung (26) erstrecken; und

wobei die Wandeinrichtung (26) eine Ventileinrichtung (236) zum Steuern von Fluid, das aus der vierten Anordnung von Kanälen (232) austritt, aufweist.

11. Külbchenformteil (20) nach irgendeinem der Ansprüche 3 bis 10, dadurch gekennzeichnet, daß die Einrichtung, welche es dem Halsring (28) ermöglicht, abwärts nach der Halspringhaltereinrichtung (30) zu forciert zu werden, eine Einrichtung umfaßt, welche es der Halsringhaltereinrichtung (30) ermöglicht, durch das Gewicht des Halsrings (28) nach abwärts forciert zu werden und von der Halsringhaltereinrichtung (30) getragen zu werden.

12. Külbchenformteil (20) nach irgendeinem der Ansprüche 3 bis 11, dadurch gekennzeichnet, daß die Klemmeinrichtung eine Einrichtung (186) zum Hochheben des Halsrings (28) von dem Träger der Halsringhaltereinrichtung (30) umfaßt.

13. Külbchenformteil (20) nach irgendeinem der Ansprüche 3 bis 12, dadurch gekennzeichnet, daß der Halsring (28) eine interne Nut (38) aufweist, welche die zweite Anordnung von internen Kanälen (216) in zwei separate Kühllochteile (222a, 222b) teilt;

wobei der Külbchenformteil (20) einen Fertigführungsring (36) aufweist, der in der internen Nut (38) angeordnet ist; und

wobei der Fertigführungspring (36) eine zwischenliegende Kanaleinrichtung (224) zum Miteinanderverbinden von jeweiligen der separaten Kühllochteile (222a, 222b) aufweist.

14. Külbchenformteil (20) nach Anspruch 13, dadurch gekennzeichnet, daß die zwischenliegende Kanaleinrichtung (224) eine Mehrzahl von bogenförmigen Schlitzen umfaßt, die im wesentlichen parallel zu der mittigen Achse angeordnet sind.

15. Verfahren zum Kühlen von Formteilen während des Formens von geschmolzenem Glas in einer Külbchenformanordnung zum Formen eines Külbchens mittels eines Preßkolbens (116), der längs einer mittigen Achse in einen zugeordneten Halsring (28) und eine zugeordnete Rohlingsformeinrichtung (20) eingefügt ist, um einen Fertighaltsteil (204) und einen integralen Körperrohteil (194) zu bilden, welches folgendes umfaßt:

a) Vorsehen einer Anordnung von Kanälen (216) zum Kühlen des Halsrings (28), welche im wesentlichen longitudinal längs der mittigen Achse angeordnet sind und welche umfangsmäßig im Abstand um die mittige Achse angeordnet sind;

b) Verbinden eines Fluids mit der Anordnung von Kanälen (216) zum Kühlen des Halsrings (28);

c) Vorsehen eines Aufnehmers (40, 42); und

d) Anordnen des Aufnehmers (40, 42) um die mittige Achse herum, wobei eine obere Oberfläche desselben proximal zu dem Halsring (28) ist;

dadurch gekennzeichnet, daß der Schritt des Verbindens eines Fluids mit der Anordnung von Kanälen (216) zum Kühlen des Halsrings (28) folgendes umfaßt:

1) Vorsehen der Anordnung von Kanälen (216) in dem Halsring (28) als interne Kanäle (216), die sich durch den Halsring (28) von einer ersten Oberfläche desselben zu einer zweiten Oberfläche desselben erstrecken;

2) Verbinden des Fluids mit den internen Kanälen (216) proximal zu der ersten Oberfläche;

3) Anordnen der oberen Oberfläche des Aufnehmers (40, 42) proximal zu der ersten Oberfläche des Halsrings (28);

4) Vorsehen eines Aufnehmerkappenverteilers (82) in dem Aufnehmer (40, 42), der im Abstand von der oberen Oberfläche angeordnet ist und der umfangsmäßig um die mittige Achse herum angeordnet ist;

5) Vorsehen einer Anordnung von internen Kanälen (216), die in den Aufnehmerkappenverteiler (82) durch die obere Oberfläche oder den Aufnehmer (40, 42) münden, die umfangsmäßig um die mittige Achse herum im Abstand angeordnet sind, und die so positioniert sind, daß sie mit der Anordnung von internen Kanälen (216) in dem Halsring (28) in Verbindung stehen; und

6) Nebeneinanderstellen der oberen Oberfläche des Aufnehmers (40, 42) gegen die erste Oberfläche des Halsrings (28).

16. Verfahren nach Anspruch 15, dadurch gekennzeichnet, daß der Schritt des Nebeneinanderstellens der oberen Oberfläche des Aufnehmers (40, 42) gegen die erste Oberfläche des Halsrings (28) das elastische Drängen der oberen Oberfläche des Aufnehmers (40, 42) gegen die erste Oberfläche des Halsrings (28) umfaßt.

17. Verfahren nach Anspruch 16, dadurch gekennzeichnet, daß der Schritt des elastischen Drängens der oberen Oberfläche des Aufnehmers (40, 42) gegen die erste Oberfläche des Halsrings (28) des Vorsehen eines Fluidbetätigers umfaßt.

18. Verfahren nach Anspruch 17, dadurch gekennzeichnet, daß der Schritt des Vorsehens eines Fluidbetätigers das Herrichten des zusammenwirkenden Teils des Aufnehmers (40, 42), um als der Fluibetätiger zu dienen, umfaßt.

19. Verfahren nach Anspruch 18, dadurch gekennzeichnet, daß der Schritt des Herrichtens der zusammenwirkenden Teile des Aufnehmers (40, 42), um als der Fluidbetätiger zu dienen, das Herrichten des Aufnehmerkappenverteilers (82) als ein Teil des Fluidbetätigers umfaßt;

wobei der Schritt des elastischen Drängens der oberen Oberfläche des Aufnehmers (40, 42) gegen die erste Oberfläche des Halsrings (28) das Verbinden des Fluids mit dem Aufnehmerkappenverteiler (82) umfaßt; und

wobei der Schritt des Verbindens des Fluids mit der zweiten Anordnung von internen Kanälen (216) das Verbinden des Fluids mit dem Aufnehmerkappenverteiler (82) umfaßt.

20. Verfahren nach irgendeinem der Ansprüche 15 bis 19, dadurch gekennzeichnet, daß dieses Verfahren es umfaßt, es dem Halsring (28) zu ermöglichen, abwärts nach dem Halsringhalter (30) zu forciert zu werden.

21. Verfahren nach irgendeinem der Ansprüche 15 bis 20, dadurch gekennzeichnet, daß das Verfahren das Klemmen des Halsrings (28) gegen die Rohlingsformeinrichtung (20) umfaßt.

22. Verfahren nach Anspruch 21, dadurch gekennzeichnet, daß das Verfahren folgendes umfaßt:

a) Vorsehen einer dritten Anordnung von internen Kanälen (230) in der Rohlingsformeinrichtung (20), die im wesentlichen parallel zu der mittigen Achse angeordnet sind und die in Umfangsrichtung um die mittige im Abstand angeordnet sind; und

b) Inverbindungsetzen der zweiten Anordnung von internen Kanälen (216) in dem Halsring (28) mit der dritten Anordnung von internen Kanälen (230), wenn der Halsring (28) gegen die Rohlingsformeinrichtug (20) geklemmt wird.

23. Verfahren nach Anspruch 22, dadurch gekennzeichnet, daß das Verfahren das Nebenschließen eines Teils des Fluids extern zu dem Halsring (28) vor dem Eintritt des Fluids in die dritte Anordnung von internen Kanälen (230) umfaßt.

24. Verfahren nach Anspruch 22 oder 23, dadurch gekennzeichnet, daß das Verfahren folgendes umfaßt:

a) Vorsehen einer vierten Anordnung von Kanälen (232);

b) Inverbindungsetzen der dritten Anordnung von internen Kanälen (230) mit den vierten Kanälen (232);

c) Vorsehen eines Ventils (236); und

d) Inverbindungsetzen der vierten Anordnung von Kanälen (232) extern zu der Anordnung durch das Ventil (236).

25. Verfahren nach irgendeinem der Ansprüche 15 bis 24, dadurch gekennzeichnet, daß das Verfahren folgendes umfaßt:

a) Vorsehen einer Nut (38), welche die Anordnung von internen Kanälen (216) in dem Halsring (28) halbiert;

b) Einfügen eines Fertigführungsrings (36) in die Nut (38);

c) Vorsehen einer Mehrzahl von Schlitzen (224) durch den Führungsring (36); und

d) Miteinanderinverbindungsetzen von jeweiligen der halbgeteilten Kanäle (222a, 222b) durch die Schlitze (224).

26. Verfahren nach den Ansprüchen 20 und 21, dadurch gekennzeichnet, daß der Schritt, es dem Halsring (28) zu ermöglichen, abwärts nach der Halsringhaltereinrichtung (30) zu forciert zu werden, es umfaßt, es den Halsring (28) zu ermöglichen, durch das Gewicht des Halsrings (28) abwärts forciert zu werden und durch den Halsringhalter (30) abgestützt zu werden; und wobei der Klemmschritt das Hochheben des Halsrings (28) von der Abstützung von dem Halsringhalter (30) umfaßt.

**Revendications**

1. Partie (20) de moulage de paraisons d'une machine de moulage d'articles individuels en verre, du type comportant un moule de paraison (22), une bague (28) de centrage du goulot, un récepteur (40, 42) et des moyens pour refroidir la bague (28) de centrage du goulot et le moule de paraison (22), lesdits moyens de refroidissement comprenant une pluralité de passages de refroidissement (216) servant à refroidir la bague (28) de centrage du goulot, caractérisé en ce que lesdits moyens servant à refroidir la bague (28) de centrage du goulot et le moule de paraison (22) incluent une pluralité de passages de refroidissement (214) situés dans le récepteur (40, 42) et communiquant avec les passsages de refroidissement (216) prévus dans la bague (28) de centrage du goulot.

2. Partie (20) de moulage de paraisons selon la revendication 1, caractérisé par une pluralité de passages de refroidissement (320) situés dans le moule de paraison (22) et communiquant avec la pluralité de passages de refroidissement (216) situés dans la bague (28) de centrage du goulot.

3. Partie (20) de moulage de paraisons d'une machine de moulage d'articles individuels en profilés verre, servant à refouler une masse de verre fondu dans un moule pour ébauche à l'aide d'un piston plongeur (116) inséré dans une paraison associée et un moule pour le goulot de manière à former une paraison possédant un élément formant corps et un élément formant goulot fini, qui en est solidaire, ladite partie (20) de moulage de paraison comprenant:

un moule de paraison (22) disposé autour d'un axe central sensiblement vertical, et possédant une surface inférieure sensiblement perpendiculaire audit axe central;

un logement récepteur (40, 42) disposé circonférentiellement autour dudit axe central et possédant une surface supérieure sensiblement perpendiculaire audit axe central;

une bague (28) de centrage du goulot, possédant un axe, une première surface sensiblement perpendiculaire audit axe, une seconde surface sensiblement parallèle à ladite première surface et espacée par rapport à cette dernière, et un ensemble de passages (216), sensiblement parallèles audit axe de la bague en étant espacés circonférentiellement autour de cet axe;

des moyens (30) de retenue de la bague de centrage du goulot, servant à recevoir et retenir ladite bague (28) de centrage du goulot, pour transférer ladite bague (28) et une paraison délivrée par ladite partie (20) de moulage de paraisons de ladite machine de moulage d'articles individuels profilés en verre jusqu'à une partie formant moule de soufflage de cette machine, pour ramener ladite bague (28) de centrage du goulot à ladite partie (20) de moulage de paraisons, ladite bague (28) étant disposée entre ledit récepteur (40, 42) et ledit moule de paraison (22), ledit axe de la bague et ledit axe central coincident sensiblement, et ladite première surface de ladite bague (28) de centrage du goulot étant disposée en bas, et pour supporter ladite bague (28) et pour permettre un déplacement limité de cette bague le long de son axe;

caractérisé en ce que

ledit moule de paraison (22) possède des première et seconde parties de moule (24a, 24b), qui sont séparables transversalement à partir dudit axe central et peuvent être fermées transversalement de manière à former ledit moule de paraison (22);

ledit logement récepteur (40, 42) contient un passage (82) véhiculant un fluide et disposé circonférentiellement autour dudit axe central, et possédant un premier ensemble de passages internes (214) qui sont espacés circonférentiellement autour dudit axe central et mettent en communication ledit passage (82) véhiculant le fluide, avec ladite surface supérieure;

ledit second ensemble de passages (216) de ladite bague (28) de centrage du goulot sont des passages internes (216) qui débouchent à la fois dans ladite première surface et dans ladite seconde surface; et

des moyens sont prévus pour repousser élastiquement ladite surface supérieure dudit logement récepteur (40, 42) vers le haut et l'amener en contact avec ladite bague (28) de centrage du goulot, lorsque lesdits moyens (30) de retenue de cette dernière ramènent ladite bague (28) de centrage du goulot à ladite partie (20) de moulage de paraisons.

4. Partie (20) de moulage de paraisons selon la revendication 3, caractérisée en ce que ladite logement récepteur (40, 42) comporte un chapeau récepteur supérieur (40), un chapeau récepteur inférieur (42), des moyens (44, 46, 50, 52) servant à raccorder de façon télescopique ledit chapeau récepteur supérieur (40) et ledit chapeau récepteur inférieur 42, et des moyens (48, 54) servant à sensiblement étanchéifier ladite connexion télescopique (44, 56, 50, 52);

ladite partie (20) de moulage de paraisons inclut un actionneur à commande pneumatique, comprenant ledit passage (82), véhiculant le fluide, dudit logement récepteur (40, 42) et ladite connexion télescopique (44, 46, 50, 52) dudit chapeau récepteur supérieur (40) et dudit chapeau récepteur inférieur (42); et

lesdits moyens pour repousser élastiquement ladite surface supérieure dudit logement récepteur vers le haut et l'amener en contact avec ladite première surface de la bague (28) de centrage du goulot comprennent ledit actionneur à commande pneumatique.

5. Partie (20) de moulage de paraisons selon la revendication 3 ou 4, caractérisée en ce que lesdits moyens servant à repousser élastiquement ladite surface vers le haut et l'amener en contact avec ladite bague (28) de centrage du goulot comprennent des moyens permettant de repousser à force vers le bas ladite bague (28) de centrage du goulot en direction desdits moyens (30) de retenue de cette bague.

6. Partie (20) de moulage de paraisons selon la revendication 3, 4 ou 5, caractérisée en ce que lesdites parties de moule (24a, 24b) incluent des moyens de serrage, comprenant une gorge circonférentielle (186) pour le serrage de ladite seconde surface de ladite bague (28) de centrage du goulot sur ladite surface inférieure dudit moule de paraison (22) lorsque lesdites parties de moule (24a, 24b) ferment.

7. Partie (20) de moulage de paraisons selon l'une quelconque des revendications 1 à 6, caractérisée en ce que ledit moule de paraison (22) comporte un troisième ensemble de passages internes (202) qui sont sensiblement parallèles audit axe central, sont espacés circonférentiellement autour de cet axe, débouchent dans ladite surface inférieure et communiquent avec ledit second ensemble de passages internes (216), lorsque ladite bague (28) de centrage du goulot est serrée contre ledit moule de paraison (22).

8. Partie (20) de moulage de paraison selon l'une quelconque des revendications 3 à 7, caractérisée en ce que ledit logement récepteur (40, 42) comporte un chapeau récepteur supérieur (40), un chapeau récepteur inférieur (42), des moyens (44, 46, 50, 52) servant à raccorder de façon télescopique ledit chapeau récepteur supérieur (40) et ledit chapeau récepteur inférieur (42), et des moyens (48, 54) servant à sensiblement étanchéifier ladite connexion télescopique (44, 56, 50, 52);

ladite partie (20) de moulage de paraisons inclut un actionneur à commande pneumatique, comprenant ledit passage (82), véhiculant le fluide, dudit logement récepteur (40, 42) et ladite connexion télescopique (44, 46, 50, 52) dudit chapeau récepteur supérieur (40) et dudit chapeau récepteur inférieur (42); et

lesdits moyens servant à repousser élastiquement ladite surface supérieure dudit logement récepteur (40, 42) vers le haut et l'amener en contact avec ladite première surface de ladite bague (28) de centrage du goulot et à permettre à ladite bague (28) de repousser élastiquement ledit logement récepteur (40, 42) vers le bas, incluent ledit actionneur à commande pneumatique.

9. Partie (20) de moulage de paraisons selon les revendications 7 ou 8, caractérisée en ce que ladite bague (28) de centrage du goulot inclut des moyens de dérivation servant à détourner une partie dudit fluide à l'extérieur de ladite partie (20) de moulage de paraisons, avant que ledit fluide de pénètre dans ledit troisième ensemble de passages internes (230).

10. Partie (20) de moulage de paraison selon la revendication 7, 8 ou 9, caractérisée en ce que ledit moule de paraison (20) inclut une surface supérieure;

ledit troisième ensemble de passages internes (230) s'étend vers le haut et débouche dans ladite surface supérieure;

ladite partie (20) de moulage de paraisons inclut des moyens formant chicane (26) servant à fermer ledit moule de paraison (22) par venue en contact avec ladite surface supérieure dudit moule de paraison (22);

lesdits moyens formant chicane (26) incluent un quatrième ensemble de passages (232) qui communiquant avec ledit troisième ensemble de passages internes (230) et s'étendent vers l'extérieur en traversant lesdits moyens formant chicane (26); et

lesdits moyens formant chicane (26) incluent des moyens formant coupape (236) servant à commander le fluide sortant dudit quatrième ensemble de passages (232):

11. Partie (20) de moulage de paraisons selon l'une quelconque des revendications 3 à 10, caractérisée en ce que lesdits moyens permettant de repousser ladite bague (28) de centrage du goulot vers le bas en direction desdits moyens (30) de retenue de cette bague comprennent des moyens permettant de repousser vers le bas les moyens (30) de retenue de la bague (28) de centrage du goulot, sous l'effet du poids de cette dernière, et permettant un soustien de ladite bague de centrage du goulot par lesdits moyens (30) de retenue de cette bague.

12. Partie (20) de moulage de paraisons selon l'une quelconque des revendications 3 à 11, caractérisée en ce que lesdits moyens de serrage comprennent des moyens (186) pour soulever ladite bague (28) de centrage du goulot à partir dudit support desdits moyens (30) de retenue de la bague de centrage du goulot.

13. Partie (20) de moulage de paraisons selon l'une quelconque des revendications 3 à 12, caractérisée en ce que ladite bague (28) de centrage du goulot comporte une gorge interne (38) qui subdivise ledit second ensemble de passages internes (216) en deux parties séparées (222a, 222b) de trous de refroidissement;

ladite partie (20) de moulage de paraisons inclut une bague de guidage de finition (36) qui est disposée dans ladite gorge interne (38); et

ladite bague de guidage de finition (36) comporte des moyens (224) formant des passages intermédiaires servant à mettre en communication certaines parties respectives desdites parties séparées (222a, 222b) de trous de refroidissement.

14. Partie (20) de moulage de paraisons selon la revendication 13, caractérisée en ce que lesdits moyens formant passages intermédiaires (224) comprennent une pluralité de fentes de forme courbe, qui sont sensiblement parallèles audit axe central.

15. Procédé pour refroidir des parties de moulage pendant la formation du verre fondu dans un ensemble de moulage de paraisons de manière à former une paraison à l'aide d'un piston plongeur (116) inséré le long d'un axe central dans une bague associée (28) de guidage du goulot, et des moyens (20) de moulage d'une ébauche de manière à définir une partie (204) de finition du goulot et une partie (194) de formation de l'ébauche de corps monobloc, et qui consiste à:

a) prévoir un ensemble de passage (216) servant à refroidir ladite bague (28) de centrage du goulot, disposés sensiblement longitudinalement le long dudit axe central et espacés circonférentiellement autour de cet axe;

b) introduire un fluide dans ledit ensemble de passages (216) pour refroidir ladite bague (28) de centrage du goulot;

c) prévoir un logement récepteur (40, 42);

d) disposer ledit logement récepteur (40, 42) autour dudit axe central de manière que sa surface supérieure soit proche de ladite bague (28) de centrage du goulot;

caractérisé en ce que ladite étape d'introduction d'un fluide dans ledit ensemble de passages (216) de manière à refroidir ladite bague (28) de centrage du goulot consiste à

1) aménager ledit ensemble de passages (216) dans ladite plaque (28) de centrage du goulot sous la forme de passages internes (216), qui traversant ladite bague (28) depuis une première surface en direction d'une seconde surface de cette bague;

2) introduire ledit fluide dans lesdits passages internes (216) à proximité de ladite première surface;

3) disposer ladite surface supérieure dudit logement récepteur (40, 42) à proximité de ladite première surface de ladite bague (28) de centrage du goulot;

4) prévoir un collecteur (82) des chapeaux récepteurs dans ladite logement récepteur (40, 42), qui est distant de ladite surface supérieure et est disposé circonférentiellement autour dudit axe central;

5) prévoir un ensemble de passages internes (216) qui débouchent, à partir dudit collecteur (82) des chapeaux récepteurs, dans ladite surface supérieure ou dans ledit logement récepteur (40, 42), sont espacés circonférentiellement autour dudit axe central et sont positionnés de manière à communiquer avec ledit ensemble de passages internes (216) ménagés dans ladite bague (28) de centrage du goulot; et

6) placer ladite surface supérieure dudit logement récepteur (40, 42) contre ladite première surface de la bague (28) de centrage du goulot

16. Procédé selon la revendication 15, caractérisé en ce que ladite étape d'application de ladite surface supérieure dudit logement récepteur (40, 42) contre ladite première surface de ladite bague (28) de centrage du goulot consiste à repousser élastiquement ladite surface supérieure dudit logement récepteur (40, 42) contre ladite première surface de ladite bague (28) de centrage du goulot.

17. Procédé selon la revendication 16, caractérisé en ce que ladite étape consistant à repousser élastiquement ladite surface supérieure dudit logement récepteur (40, 42) contre ladite première surface de ladite bague (28) de centrage du goulot inclut le fait de disposer un actionneur fluidique.

18. Procédé selon la revendication 17, caractérisé en ce que ladite étape consistant à disposer un actionneur fluidique inclut l'adaptation d'une partie coopérante dudit logement récepteur (40, 42) pour qu'elle constitue ledit actionneur fluidique.

19. Procédé selon la revendication 18, caractérisé en ce que ladite étape consistant à adapter des parties coopérantes dudit logement récepteur (40, 42) pour qu'elles constituent ledit actionneur fluidique inclut l'adaptation dudit collecteur (82) des chapeaux récepteurs en tant que partie dudit actionneur fluidique;

ladite étape consistant à repousser élastiquement ladite surface supérieure dudit logement récepteur (40, 42) contre ladite première surface de ladite bague (28) de centrage du goulot consiste à envoyer ledit fluide audit collecteur (82) des chapeaux récepteurs; et

ladite étape consistant à appliquer un fluide audit second ensemble de passages internes (216) consiste à appliquer ledit fluide audit collecteur (82) des chapeaux récepteurs.

20. Procédé selon l'une quelconque des revendications 15 à 19, caractérisé en ce qu'il inclut le fait de repousser ladite bague (28) de centrage du goulot vers le bas en direction dudit dispositif (30) de retenue de cette bague.

21. Procédé selon l'une quelconque des revendications 15 à 20, caractérisé en ce qu'il inclut le fait de serrer ladite bague (28) de centrage du goulot contre lesdits moyens (20) de moulage de l'ébauche.

22. Procédé selon la revendication 21, caractérisé en ce qu'il inclut le fait

a) d'aménager un troisième ensemble de passages internes (230) dans lesdits moyens (20) de moulage de l'ébauche, qui sont sensiblement parallèles audit axe central et espacés circonférentiellement autour de cet axe; et

b) de mettre en communication ledit second ensemble de passages internes (216) situés dans ladite bague (28) de centrage du goulot et ledit troisième ensemble de passages internes (230) lorsque ladite bague (28) de centrage du goulot est serrée contre lesdits moyens (20) de moulage de l'ébauche.

23. Procédé selon la revendication 22, caractérisé en ce qu'il inclut le fait de dévier une partie dudit fluide à l'extérieur de ladite bague (28) de centrage du goulot avant la pénétration dudit fluide dans ledit troisième ensemble de passages internes (230).

24. Procédé selon la revendication 22 ou 23, caractérisé en ce qu'il inclut le fait de:

a) prévoir un quatrième ensemble de passages (232);

b) mettre en communication ledit troisième ensemble de passages internes (230) avec lesdits quatrièmes passages (232);

c) prévoir une soupape (236); et

d) relier ledit quatrième ensemble de passages (232) à l'extérieur de la machine par l'intermédiaire de ladite soupape (236).

25. Procédé selon l'une des revendications 15 à 24, caractérisé en ce qu'il inclut le fait

a) d'aménager une gorge (28) qui subdivise ledit ensemble de passages internes (216) situés dans ladite bague (28) de centrage du goulot;

b) d'insérer une bague de guidage de finition (38) dans ladite gorge (38);

(c) d'aménager une pluralité de fentes (224) à travers ladite bague de guidage (36); et

(d) de mattre en communication réciproque certains respectifs desdits passages subdivisés (222a, 222b) par l'intermédiaire desdites fentes (224).

26. Procédé selon les revendications 20 et 21, caractérisé en ce que ladite étape consistant à repousser ladite bague (28) de centrage du goulot vers le bas en direction desdits moyens (30) de retenue de cette bague inclut le fait de laisser la bague (28) de centrage du goulot descendre sous l'action de son poids et être supportée par ledit dispositif (30) de retenue de la bague; et

ladite étape de serrage consiste à soulever ladite bague (28) de centrage du goulot à partir dudit support dudit dispositif (30) de retenue de cette bague.

*FIG. 1*

FIG. 2

# FIG. 3

20

24a
194
190
189
188
28
30
56
40
42
74
185

192

24b
22
230
116
186
187
36
216
96
214
82
212
150
112
182
110
104

FIG. 4

4

FIG. 5

FIG. 6

FIG. 8

FIG. 7

7

FIG. 9

FIG. 10